# EUROPÄISCHE PATENTSCHRIFT

(11) **EP 3 171 051 B1**
(45) Veröffentlichungstag und Bekanntmachung des Hinweises auf die Patenterteilung: **24.07.2019**
(21) Anmeldenummer: 16197834.1
(22) Anmeldetag: 08.11.2016
(51) Int. Cl.: F16F 9/34, F16F 9/02

(54) **VERSTELLEINRICHTUNG**
ADJUSTING DEVICE
DISPOSITIF DE RÉGLAGE

(30) Priorität: 17.11.2015 DE 102015119820
(43) Veröffentlichungstag der Anmeldung: 24.05.2017
(73) Patentinhaber: Stabilus GmbH, 56070 Koblenz (DE)
(72) Erfinder: Terschanski, Michael, 55494 Rheinböllen (DE); Schilz, Arnold, 56112 Lahnstein (DE); Birkenbeul, Markus, 56642 Kruft (DE)
(74) Vertreter: Klein, Thomas

(56) Entgegenhaltungen:
- EP-A2- 0 383 303
- WO-A1-82/01575
- DE-B3-102006 047 867
- DE-T5-112013 003 506
- US-A- 3 948 499

## Beschreibung

Die Erfindung bezieht sich auf eine Verstelleinrichtung zum Verstellen eines Bauteils, insbesondere einer Stuhllehne, mit einer Gasfeder, die einen Zylinder aufweist, der an seinem einen Ende geschlossen ist und in dem ein Kolben verschiebbar angeordnet ist, der den mit einem unter Überdruck stehenden Fluid gefüllten Zylinder in eine erste und eine zweite Zylinderkammer unterteilt sowie einseitig eine Kolbenstange aufweist, die die dem geschlossenen Ende des Zylinders abgewandte zweite Zylinderkammer durchragt und abgedichtet aus dem Zylinder herausgeführt ist, wobei durch den Überdruck in der ersten Zylinderkammer der Kolben mit einer Ausschubkraft beaufschlagt ist, mit einer von der zweiten Zylinderkammer zur ersten Zylinderkammer führenden Verbindung, in der ein Ventil und diesem nachgeschaltet ein Strömungsdrosselkanal angeordnet ist, die einen gedrosselten Fluidstrom von der zweiten in die erste Zylinderkammer ermöglicht und in der entgegengesetzten Strömungsrichtung sperrt und mit einem manuell betätigbaren Verbindungsventil, durch das die erste und zweite Zylinderkammer miteinander verbindbar sind, wobei bei in Einschubrichtung belasteter Kolbenstange und geschlossenem Verbindungsventil der Durchgang des Ventils von der ersten Zylinderkammer zur zweiten Zylinderkammer gesperrt ist.

Bei derartigen Verstelleinrichtungen kann bei nicht belasteter Verstelleinrichtung die Kolbenstange mit dem Kolben aufgrund des Strömungsdrosselkanals mit einer geringen Ausschubgeschwindigkeit aus dem Zylinder ausfahren, während in Einschubrichtung eine Blockierung erfolgt, die durch eine manuelle Öffnung des Verbindungsventils aufgehoben wird, so daß unter Einschubbelastung der Kolbenstange diese zu einer gewünschten Position einschiebbar ist.

Solche Verstelleinrichtungen werden z.B. zur Verstellung von Sitzrückenlehnen, insbesondere von Bussitzrückenlehnen benutzt. Zur individuellen Einstellung der Sitzrückenlehne wird manuell das Verbindungsventil geöffnet, wodurch die Blockierwirkung der Gasfeder außer Kraft gesetzt wird und ein freies Verstellen der Sitzrückenlehne ermöglicht wird. Durch Beendigung der manuellen Betätigung des Verbindungsventils wird die Blockierfunktion der Gasfeder wieder aktiviert und die Sitzlehne bleibt in der eingestellten Position fixiert, sofern die Rückenlehne und damit die Kolbenstange in Einschubrichtung durch eine auf dem Sitz sitzende Person belastet ist.

Ist die Rückenlehne unbelastet, kommt es zu einem langsamen Ausschieben der Kolbenstange und somit zu einem langsamen Zurückstellen der Sitzlehne in eine Ausgangsstellung, in der die Kolbenstange sich in ihrer maximal ausgefahrenen Position befindet.

Da der Strömungsdrosselkanal der bekannten Verstelleinrichtung nicht prozeßsicher, d.h. ausreichend wiederholgenau herstellbar oder einstellbar ist, kommt es zu einer großen Streuung der Ausschubzeiten der Kolbenstangen, was zu unterschiedlichen Rückstellgeschwindigkeiten der Sitzlehnen führt.

Aus der DE 10 2006 047867 B3 ist eine Verstelleinrichtung bekannt, die weitgehend der eingangs beschriebenen Verstelleinrichtung entspricht. Der Kolben dieser Verstelleinrichtung weist eine in die erste Zylinderkammer ragende Buchse auf, in deren zylindrische Innenausnehmung ein Zylinderteil eingesetzt ist.

Aus der WO 82/01575 A1 ist eine Bremse bekannt, die zwei Kammern aufweist, wobei eine Kammer in einem Zylinder und die andere Kammer in einem Kolben ausgebildet ist, der in der Kammer des Zylinders manuell verschiebbar angeordnet ist. Beide Kammern sind mit einer Bremsflüssigkeit gefüllt. Die Kammer des Kolbens ist über ein Rückschlagventil mit der Kammer im Zylinder verbindbar. Weiterhin ist zwischen den beiden Kammern eine als schraubenförmige Nut ausgebildete Drossel vorhanden, die in beide Strömungsrichtungen durchströmbar ist.

Aufgabe der Erfindung ist es eine Verstelleinrichtung der eingangs genannten Art zu schaffen, die bei einfachem und kostengünstig herstellbarem Aufbau ein Ausschieben von Kolben und Kolbenstange sowohl mit einer schnellen Ausschubgeschwindigkeit als auch mit einer geringen Ausschubgeschwindigkeit hoher Wiederholgenauigkeit ermöglicht.

Diese Aufgabe wird erfindungsgemäß dadurch gelöst, daß der Kolben eine in die erste Zylinderkammer ragende Buchse aufweist, in deren zylindrische Innenausnehmung ein Zylinderteil paßgenau eingesetzt ist, wobei an der Innenwand der Buchse oder an der radial umlaufenden Mantelfläche des Zylinderteils eine zum Zylinderteil oder zur Buchse hin offene, wendelförmige Drosselnut ausgebildet ist, deren erstes Ende mit dem Ausgang des Ventils und dessen zweites Ende mit der ersten Zylinderkammer in Verbindung ist.

Vorzugsweise erstrecken sich Buchse und Zylinderteil koaxial in die erste Zylinderkammer.

Diese Drosselnut ist auf einfache Weise mit einem eng toleriert definierten Querschnitt sowie eng toleriert definierter Länge prozeßsicher und wiederholgenau herstellbar, so daß die Drosselwirkung und damit auch die definierte Ausschubgeschwindigkeit mit nur geringer Streuungsbreite erreicht wird. Die Ausbildung mit der Buchse und der Zylinderteil führt zu einem Aufbau mit sehr wenigen und einfach aufgebauten und einfach herstellbaren Bauteilen, so daß die Verstelleinrichtung kostengünstig herstellbar und einfach montierbar ist.

Durch eine unterschiedliche Steigung der Wendel der Drosselnut und/oder der Überdeckungslänge von Buchse und Zylinderteil kann die Drosselnut unterschiedliche Länge aufweisen. Auch ist der Querschnitt der Drosselnut variierbar. Damit sind bei ansonsten gleichen Abmessungen unterschiedliche Drosselcharakteristiken erreichbar.

Mit der erfindungsgemäßen Verstelleinrichtung ist eine Verwendung zur Neigungseinstellung der Lehne eines Stuhles, insbesondere der Lehne eines Sitzes in einem Bus möglich. Die Fahrgäste können so während der Reise individuell die Neigung ihrer schwenkbaren Sitzlehne einstellen. Bei kurzzeitigem Verlassen des Sitzes erfolgt keine merkbare Verstellung.

Werden die Sitze aber für längere Zeit wie z.B. fünfzehn Minuten nicht benutzt, so werden alle Sitzlehnen selbsttätig einheitlich in ihre Ausgangsstellung verstellt.

Vorzugsweise ist das Fluid im Zylinder ein Hydrauliköl.

Einfach herstellbar ist es, wenn die Drosselnut über ihre Länge gleichen Querschnitt aufweist.

Es ist natürlich auch möglich, daß die Drosselnut über ihre Länge einen ungleichen Querschnitt aufweist.

Vorzugsweise erstrecken sich Buchse und Zylinderteil koaxial in die erste Zylinderkammer.

Zu einem einfachen Aufbau führt es, wenn das Zylinderteil eine den Auslaß des Verbindungsventils mit der ersten Zylinderkammer verbindenden Durchlaßöffnung aufweist.

Zur einfachen, keine Verbindungselemente benötigenden Verbindung von Buchse und Zylinderteil führt es, wenn Buchse und Zylinderteil mittels einer Preßpassung miteinander verbunden sind.

Bilden Buchse und Zylinderteil eine vormontierbare Baueinheit, die mit dem Kolben verbindbar ist, so ist die Drosselnut leicht und damit mit geringen Toleranzen herstellbar. Außerdem kann dieselbe Baueinheit für Verstelleinrichtungen mit unterschiedlichen Zylindern und Kolben verwendet werden.

Axial zwischen Kolben und Buchse oder Zylinderteil kann eine axiale Dichtung angeordnet sein, die radial die das Ventil aufweisende Verbindung von der das Verbindungsventil aufweisenden Verbindung trennt.

Zur einfachen Verbindbarkeit der Buchse oder der Baueinheit aus Buchse und Zylinderteil kann die zylindrische Innenausnehmung der Buchse an ihrem dem Kolben zugewandten Endbereich ein Innengewinde aufweisen, mit dem die Buchse auf ein entsprechendes Außengewinde des Kolbens aufschraubbar ist.

In einfacher Ausbildung kann das Ventil eine an der radial umlaufenden Mantelfläche des Kolbens und mit der ersten Zylinderkammer verbundene, radial umlaufende Nut aufweisen, in der ein Dichtring geringerer axialer Erstreckung als der Nut zwischen einer der der ersten Zylinderkammer näheren ersten Nutseitenwand und einer der zweiten Zylinderkammer näheren zweiten Nutseitenwand axial bewegbar angeordnet ist, der mit seinem Außenumfang dichtend an der Innenwand des Zylinders in Anlage ist und zwischen dessen Innenumfang und dem Boden der Nut ein Ringspalt gebildet ist, der mit dem ersten Ende der wendelförmigen Drosselnut verbunden ist.

Dabei erfüllt der Dichtring nicht nur die Funktion als Schließglied sondern auch als Kolbendichtung zur Trennung der ersten von der zweiten Zylinderkammer und somit Bauteilreduzierend wirken.

Das Verbindungsventil kann Bauraum und Bauteile sparend eine im Kolben koaxial ausgebildete Ventilkammer aufweisen, die über einen oder mehrere Kanäle mit der zweiten Zylinderkammer verbunden ist und die eine koaxiale, zur ersten Zylinderkammer gerichtete Ventilöffnung besitzt, die von einem Ventilglied verschließbar ist, das mittels eines die Ventilkammer koaxial durchragenden, manuell betätigbaren Ventilstifts koaxial in Richtung zur ersten Zylinderkammer aus seiner Schließstellung in seine Öffnungsstellung bewegbar ist, wobei die Ventilöffnung mit der Durchlaßöffnung des Zylinderteils verbunden ist.

Das Verbindungsventil kann ein Schieberventil sein. Vorzugsweise ist das Verbindungsventil aber ein Sitzventil.

Ausführungsbeispiele der Erfindung sind in der Zeichnung dargestellt und werden im folgenden näher beschrieben. Es zeigen
- Figur 1: einen Ausschnitt eines ersten Ausführungsbeispiels einer Verstelleinrichtung in Bereich des Kolbens im Längsschnitt
- Figur 2: eine perspektivische Darstellung des Ausschnitts der Verstelleinrichtung nach Figur 1 in Bereich des Kolbens
- Figur 3: einen Ausschnitt eines zweiten Ausführungsbeispiels einer Verstelleinrichtung in Bereich des Kolbens im Längsschnitt
- Figur 4: eine perspektivische Darstellung des Ausschnitts der Verstelleinrichtung nach Figur 3 in Bereich des Kolbens.

Die in den Figuren dargestellten Verstelleinrichtungen weisen eine Gasfeder mit einem Zylinder 1 auf, in dem ein Kolben 2, 2' axial verschiebbar angeordnet ist, der den mit einem unter Druck stehenden ölgefüllten Innenraum des Zylinders 1 in eine erste Zylinderkammer 3 und eine zweite Zylinderkammer 4 unterteilt. An dem Ende der ersten Zylinderkammer 3 ist der Innenraum des Zylinders 1 durch einen nicht dargestellten verschiebbaren Trennkolben von der ersten Zylinderkammer 3 abgetrennt und bildet einen mit unter Druck stehendem Gas gefüllten Gasraum.

Auf der Seite der ersten Zylinderkammer 3 ist der Zylinder 1 an seinem nicht dargestellten Ende geschlossen und kann mit dem einen der zu verstellenden Bauteile, z.B. einem feststehenden Bauteil eines Kraftfahrzeugs gelenkig verbunden werden.

Durch die zweite Zylinderkammer 3 ist eine mit ihrem einen Ende fest mit dem Kolben 2, 2' verbundene Kolbenstange 5 koaxial hindurch und mittels einer nicht dargestellten Dicht- und Führungseinheit abgedichtet aus dem Zylinder 1 herausgeführt.

Das freie Ende der Kolbenstange 5 kann z.B. an einer zu verstellenden Sitzlehne des Kraftfahrzeugs angelenkt sein.

An der an der Innenwand des Zylinders 1 verschiebbar geführten zylindrischen Mantelfläche des Kolbens 2, 2' ist eine radial umlaufende Nut 6 ausgebildet, in der ein an der Innenwand des Zylinders 1 dichtend anliegender Dichtring 7 angeordnet ist, der ein Ventilglied eines Ventils 14 bildet.

Da die axiale Erstreckung des Dichtrings 7 geringer ist als die axiale Erstreckung der Nut 6 ist der Dichtring 7 in der Nut 6 axial bewegbar.

Der Dichtring 7 ist an seiner dem Nutgrund 8 zugewandten Seite unterströmbar.

Von dem Nutgrund 8 aus führt ein im Kolben 2, 2' ausgebildeter Verbindungskanal 9 zu einer Drosselnut 11, 11', die später beschrieben wird.

In dem Kolben 2, 2' ist weiterhin eine koaxiale zylindrische Ventilkammer 15 eines Verbindungsventils 16 ausgebildet, in der ein Ventilstift 17 axial bewegbar angeordnet ist, der in seinem in der Schließstellung in der Ventilkammer 15 befindlichen Bereich 18 einen geringeren Durchmesser aufweist als die Ventilkammer 15.

Mit seinem der zweiten Zylinderkammer 4 zugewandten Endbereich ragt der Ventilstift 17 durch eine Dichtungsanordnung 19 abgedichtet in eine durchgehende Koaxialbohrung 20 der rohrartig ausgebildeten Kolbenstange 5.

In der Koaxialbohrung 20 ist eine nicht dargestellte manuell verschiebbare Betätigungsstange angeordnet, die mit ihrem einen Ende zur manuellen Beaufschlagung nach außen ragt.

Mit ihrem anderen Ende ist von der Betätigungsstange der Ventilstift 17 in Richtung zur ersten Zylinderkammer 3 hin verschiebbar beaufschlagbar. In dem Kolben 2, 2' ist ein radialer Kanal 22 ausgebildet, über den die zweite Zylinderkammer 4 mit der Ventilkammer 15 verbunden ist.
Eine koaxiale Ventilöffnung 23 führt von der Ventilkammer 15 zu der der ersten Zylinderkammer 3 zugewandten Seite des Kolbens 2, 2'.

Der Ventilstift 17 ragt mit seinem Bereich 18 reduzierten Durchmessers durch die koaxiale Ventilöffnung 23 und weist an seinem zur ersten Zylinderkammer 3 gerichteten Ende eine ein Schließglied eines Sitzventils bildende konische Erweiterung 24 auf.

An seinem der ersten Zylinderkammer 3 zugewandten Endbereich weist der Kolben 2, 2' eine zylindrische Ausnehmung 21 auf, in die die Ventilöffnung 23 mündet und die konische Erweiterung 24 ragt. An der Mündung der Ventilöffnung 23 in die Ausnehmung 21 ist am Kolben 2, 2' ein ringförmiger Ventilsitz 25 angeordnet, mit dem die konische Erweiterung 24 zum Öffnen und Schließen des Durchgangs des Verbindungsventils 16 zusammen wirkt.

Stirnseitig zur ersten Zylinderkammer 3 ist an dem Kolben 2, 2' eine in die erste Zylinderkammer 3 koaxial ragende Baueinheit angeordnet, die aus einer Buchse 10, 10' und einem Zylinderteil 12, 12' besteht. Dabei ist das Zylinderteil 12, 12' in eine zylindrische Innenausnehmung 13 der Buchse 10, 10' durch Preßpassung passgenau eingesetzt. Das Zylinderteil 12, 12' besitzt eine koaxiale durchgehende Durchlaßöffnung 26, durch die die zylindrische Ausnehmung 21 mit der ersten Zylinderkammer 3 verbunden ist.

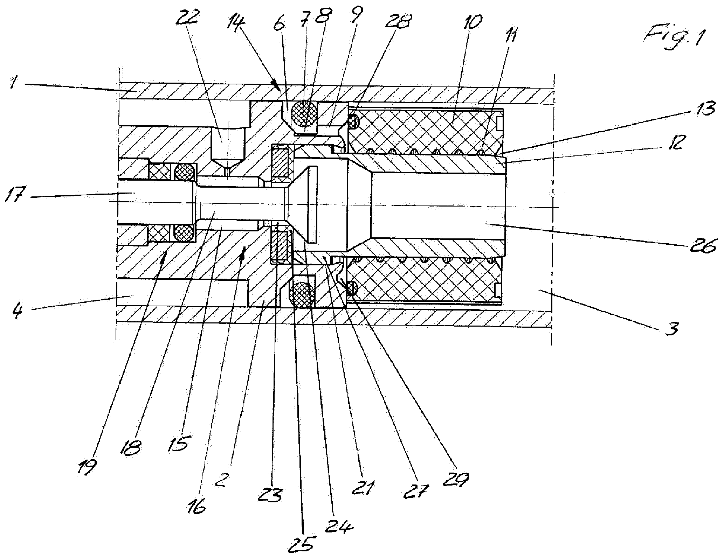

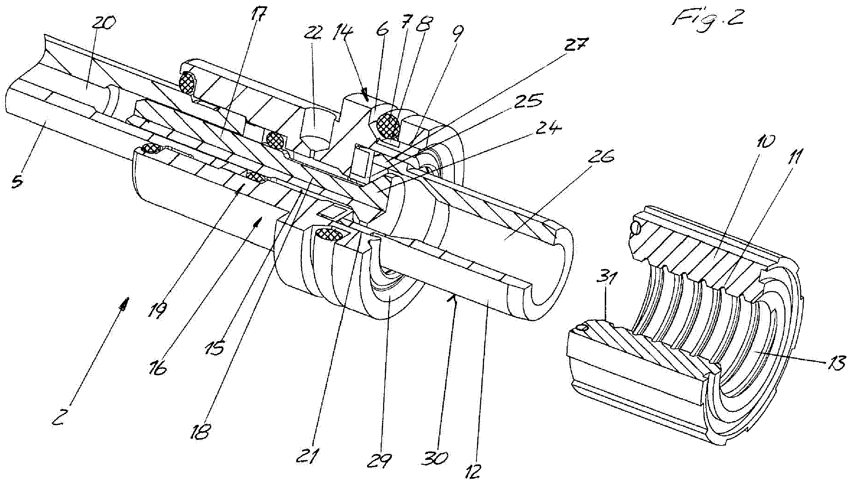

In den Figuren 1 und 2 weist das Zylinderteil 12 einen rohrartigen koaxialen Fortsatz 27 auf, der in die zylindrische Ausnehmung 21 ragt und mit seinem stirnseitigen Ende an dem Ventilsitz 25 axial abgestützt ist. Die zylindrische Innenausnehmung 13 des Zylinderteils 12 weist einen geringeren Durchmesser als die zylindrische Ausnehmung 21 des Kolbens 2 auf. In seinem dem Kolben 2 zugewandten Endbereich ist der Fortsatz 27 stufenartig radial auf den Durchmesser der zylindrischen Ausnehmung 21 erweitert. Durch radial nach innen Verstemmen des radial umlaufenden Mündungsbereichs der zylindrischen Ausnehmung 21 wird die stufenartige Erweiterung des Fortsatzes 27 hintergriffen und die Baueinheit aus Buchse 10 und Zylinderteil 12 fest mit dem Kolben 2 verbunden. Dabei liegt die dem Kolben 2 zugewandte Stirnseite der Buchse 10 über einen zweiten Dichtring 28 stirnseitig an dem Kolben 10 an.

Radial innerhalb des zweiten Dichtrings 28 mündet der Verbindungskanal 9 in einen Ringkanal 29, der den ringförmigen Bereich zwischen radial umlaufender Mantelfläche 30 des Zylinderteils 12 und der radial umlaufenden Innenwand 31 der Buchse 10 axial überdeckt.

An der Innenwand 31 der Buchse 10 ist eine wendelförmige Drosselnut 11 mit über ihre Länge gleichen Querschnitts ausgebildet, so daß die Nut 6 des Ventils 14 über den Verbindungskanal 9, den Ringkanal 29 und die Drosselnut 11 mit der ersten Zylinderkammer 3 verbunden ist.

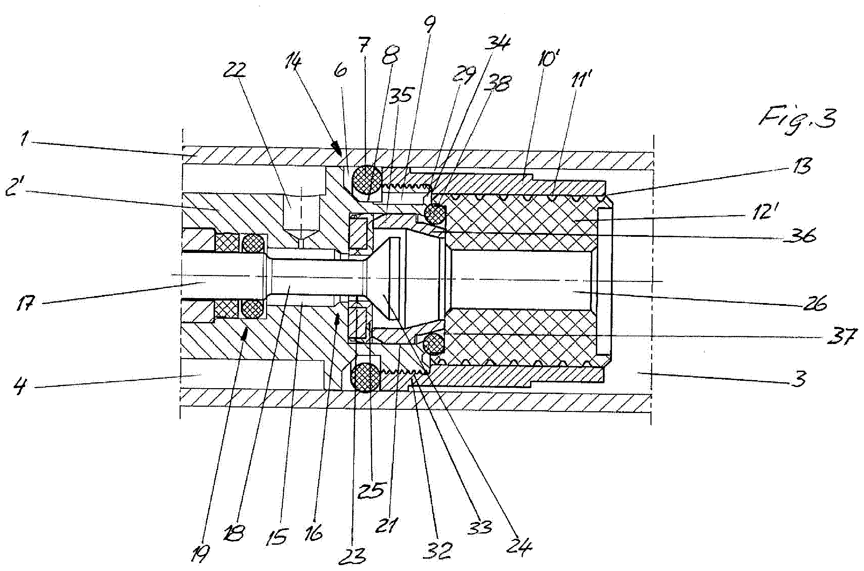

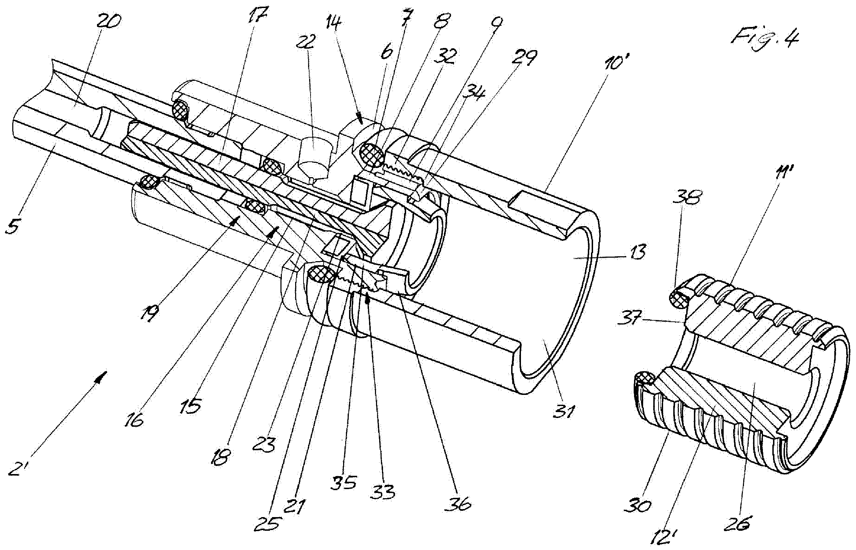

In den Figur 3 und 4 weist die Buchse 10' an ihrem dem Kolben 2' zugewandten Ende einen weiteren rohrartigen Fortsatz 32 auf, der mit einem Innengewinde versehen und auf ein Außengewinde an dem der zweiten Zylinderkammer 3 zugewandten Endbereich des Kolbens 2' aufgeschraubt ist. Der Bereich der durch das Innengewinde und das Außengewinde gebildeten Gewindeverbindung 33 zwischen Kolben 2' und Zylinderteil 12' weist einen größeren Durchmesser als die zylindrische Innenausnehmung 13 der Buchse 10' auf, so daß am Übergang von der Innenausnehmung 13 zum Innengewinde eine Schulter 34 gebildet ist, mit der das auf die Buchse 10' aufgeschraubte Zylinderteil 12' an der Stirnseite des Kolbens 2' zur Anlage kommt.

In der zylindrischen Ausnehmung 21 ist ein rohrähnliches Zwischenstück 35 gleichen Außendurchmessers wie dem Innendurchmesser der Ausnehmung 21 angeordnet, das an seinem der ersten Zylinderkammer 3 zugewandten Endbereich 36 sich konisch verjüngt.

Die der ersten Zylinderkammer 3 abgewandte Stirnseite des Zylinderteils 12' weist eine stufige Vertiefung 37 auf. In diese stufige Vertiefung 37 ist ein dritter Dichtring 38 eingesetzt, der axial zwischen dem Boden der stufigen Vertiefung 37 und dem Kolben 2' sowie radial zwischen der Außenseite des Endbereichs 36 des Zwischenstücks 35 und der radial umlaufenden Wand der stufigen Vertiefung 37 eingespannt ist.

Radial außerhalb des dritten Dichtrings 38 mündet der Verbindungskanal 9 in einen Ringkanal 29, der den ringförmigen Bereich zwischen radial umlaufender Mantelfläche 30 des Zylinderteils 12' und der radial umlaufenden Innenwand 31 der Buchse 10' axial überdeckt.

Durch den dritten Dichtring 38 ist der Ringkanal 29 gegenüber zylindrischer Ausnehmung 21 und der Durchlaßöffnung 26 abgedichtet.

An der Mantelfläche 30 des Zylinderteils 12' ist eine wendelförmige Drosselnut 11' gleichen Querschnitts über ihre Länge ausgebildet, so daß die Nut 6 des Ventils 14 über den Verbindungskanal 9, den Ringkanal 29 und die Drosselnut 11' mit der ersten Zylinderkammer 3 verbunden ist.

Bei beiden Ausführungsbeispielen wird bei in Einschubrichtung belasteter Kolbenstange 5 und geschlossenem Verbindungsventil 16 durch den höheren Druck in der ersten Zylinderkammer 3 gegenüber dem Druck in der zweiten Zylinderkammer 4 der Dichtring 7 des Ventils 14 in Anlage an die der zweiten Zylinderkammer 4 nähere Seitenwand der Nut 6 gepreßt und sperrt somit einen Durchgang von der ersten Zylinderkammer 3 zur zweiten Zylinderkammer 4. Damit ist die Verstelleinrichtung blockiert.

Ist die Kolbenstange 5 bei geschlossenem Verbindungsventil 16 nicht in Einschubrichtung belastet, herrscht ein ausgeglichener Druck in beiden Zylinderkammern 3 und 4. Die größere Fläche der der ersten Zylinderkammer 3 zugewandten Seite des Kolbens 2, 2' führt aber zu einer Ausschubbewegung von Kolben 2, 2' und Kolbenstange 5.

Dabei bewegt sich der Dichtring 7 zu der der ersten Zylinderkammer 3 näheren Seitenwand der Nut 6 und gibt einen Durchgang von der zweiten Zylinderkammer 4 zum Verbindungskanal 9 frei.

Dadurch kann Öl von der zweiten Zylinderkammer 4 über den Verbindungskanal 9 zum Ringkanal 29 und durch die Drosselnut 11, 11' zur ersten Zylinderkammer 3 strömen.

Dieser Strömungsweg über die Drosselnut 11, 11' führt zu einer sehr langsamen Ausschubbewegung von Kolben 2, 2' und Kolbenstange 5.
Soll diese Ausschubbewegung bei unbelasteter Kolbenstange 2 schnell erfolgen, so wird manuell über die Betätigungsstange 21 das Verbindungsventil 16 geöffnet, so daß zusätzlich ein großer Strömungsquerschnitt zur Verfügung steht.

Soll bei belasteter Kolbenstange 5 eine Einschubbewegung erfolgen, so wird manuell das Verbindungsventil 16 geöffnet. Damit kann ungedrosselt Öl von der ersten Zylinderkammer 3 durch den Ventildurchgang des Verbindungsventils 16 in die zweite Zylinderkammer 4 strömen.

### Bezugszeichenliste

- 1: Zylinder
- 2: Kolben
- 2': Kolben
- 3: erste Zylinderkammer
- 4: zweite Zylinderkammer
- 5: Kolbenstange
- 6: Nut
- 7: Dichtring
- 8: Nutgrund
- 9: Verbindungskanal
- 10: Buchse
- 10': Buchse
- 11: Drosselnut
- 11': Drosselnut
- 12: Zylinderteil
- 12': Zylinderteil
- 13: zylindrische Ausnehmung
- 14: Ventil
- 15: Ventilkammer
- 16: Verbindungsventil
- 17: Ventilstift
- 18: Bereich
- 19: Dichtungsanordnung
- 20: Koaxialbohrung
- 21: zylindrische Ausnehmung
- 22: Kanal
- 23: Ventilöffnung
- 24: konische Erweiterung
- 25: Ventilsitz
- 26: Durchlaßöffnung
- 27: Fortsatz
- 28: zweiter Dichtring
- 29: Ringkanal
- 30: Mantelfläche Zylinderteil
- 31: Innenwand Buchse
- 32: weiterer Fortsatz
- 33: Gewindeverbindung
- 34: Schulter
- 35: Zwischenstück
- 36: Endbereich
- 37: Vertiefung
- 38: dritter Dichtring

## Patentansprüche

1. Verstelleinrichtung zum Verstellen eines Bauteils, insbesondere einer Stuhllehne, mit einer Gasfeder, die einen Zylinder (1) aufweist, der an seinem einen Ende geschlossen ist und in dem ein Kolben (2, 2') verschiebbar angeordnet ist, der den mit einem unter Überdruck stehenden Fluid gefüllten Zylinder (1) in eine erste und eine zweite Zylinderkammer (3, 4) unterteilt sowie einseitig eine Kolbenstange (5) aufweist, die die dem geschlossenen Ende des Zylinders (1) abgewandte zweite Zylinderkammer (4) durchragt und abgedichtet aus dem Zylinder (1) herausgeführt ist, wobei durch den Überdruck in der ersten Zylinderkammer (3) der Kolben (2, 2') mit einer Ausschubkraft beaufschlagt ist, mit einer von der zweiten Zylinderkammer (4) zur ersten Zylinderkammer (3) führenden Verbindung, in der ein Ventil (14) und diesem nachgeschaltet ein Strömungsdrosselkanal angeordnet ist, die einen gedrosselten Fluidstrom von der zweiten in die erste Zylinderkammer (4, 3) ermöglicht und in der entgegengesetzten Strömungsrichtung sperrt und mit einem manuell betätigbaren Verbindungsventil (16), durch das die erste und zweite Zylinderkammer (3, 4) miteinander verbindbar sind, wobei bei in Einschubrichtung belasteter Kolbenstange (5) und geschlossenem Verbindungsventil (16) der Durchgang des Ventils (14) von der ersten Zylinderkammer (3) zur zweiten Zylinderkammer (4) gesperrt ist, **dadurch gekennzeichnet, daß** der Kolben (2, 2') eine in die erste Zylinderkammer (3) ragende Buchse (10, 10') aufweist, in deren zylindrische Innenausnehmung (13) ein Zylinderteil (12, 12') paßgenau eingesetzt ist, wobei an der Innenwand (31) der Buchse (10) oder an der radial umlaufenden Mantelfläche (30) des Zylinderteils (12') eine zum Zylinderteil (12) oder zur Buchse (10') hin offene, wendelförmige Drosselnut (11, 11') ausgebildet ist, deren erstes Ende mit dem Ausgang des Ventils (14) und dessen zweites Ende mit der ersten Zylinderkammer (3) in Verbindung ist.

2. Verstelleinrichtung nach Anspruch 1, **dadurch gekennzeichnet, daß** die Drosselnut (11, 11') über ihre Länge gleichen Querschnitt aufweist.

3. Verstelleinrichtung nach einem der vorhergehenden Ansprüche, **dadurch gekennzeichnet, daß** sich Buchse (10, 10') und Zylinderteil (12, 12') koaxial in die erste Zylinderkammer (3) erstrecken.

4. Verstelleinrichtung nach einem der vorhergehenden Ansprüche, **dadurch gekennzeichnet, daß** das Zylinderteil (12, 12') eine den Auslaß des Verbindungsventils (16) mit der ersten Zylinderkammer (3) verbindenden Durchlaßöffnung (26) aufweist.

5. Verstelleinrichtung nach einem der vorhergehenden Ansprüche, **dadurch gekennzeichnet, daß** Buchse (10, 10') und Zylinderteil (12, 12') mittels einer Preßpassung miteinander verbunden sind.

6. Verstelleinrichtung nach einem der vorhergehenden Ansprüche, **dadurch gekennzeichnet, daß** Buchse (10, 10') und Zylinderteil (12, 12') eine vormontierbare Baueinheit bilden, die mit dem Kolben (2, 2') verbindbar ist.

7. Verstelleinrichtung nach einem der vorhergehenden Ansprüche, **dadurch gekennzeichnet, daß** axial zwischen Kolben (2, 2') und Buchse (10, 10') oder Zylinderteil (12, 12') eine axiale Dichtung (28, 38) angeordnet ist, die radial die das Ventil (14) aufweisende Verbindung von der das Verbindungsventil (16) aufweisenden Verbindung trennt.

8. Verstelleinrichtung nach einem der Ansprüche 6 und 7, **dadurch gekennzeichnet, daß** die zylindrische Innenausnehmung (13) der Buchse (10') an ihrem dem Kolben (2') zugewandten Endbereich ein Innengewinde aufweist, mit dem die Buchse (10') auf ein entsprechendes Außengewinde des Kolbens (2') aufschraubbar ist.

9. Verstelleinrichtung nach einem der vorhergehenden Ansprüche, **dadurch gekennzeichnet, daß** das Ventil (14) eine an der radial umlaufenden Mantelfläche des Kolbens (2, 2') und mit der ersten Zylinderkammer (3) verbundene, radial umlaufende Nut (4) aufweist, in der ein Dichtring (7) geringerer axialer Erstreckung als der Nut (6) zwischen einer der der ersten Zylinderkammer (3) näheren ersten Nutseitenwand und einer der zweiten Zylinderkammer (4) näheren zweiten Nutseitenwand axial bewegbar angeordnet ist, der mit seinem Außenumfang dichtend an der Innenwand des Zylinders (1) in Anlage ist und zwischen dessen Innenumfang und dem Boden der Nut ein Ringspalt gebildet ist, der mit dem ersten Ende der wendelförmigen Drosselnut verbunden ist.

10. Verstelleinrichtung nach einem der vorhergehenden Ansprüche, **dadurch gekennzeichnet, daß** das Verbindungsventil (16) eine im Kolben (2, 2') koaxial ausgebildete Ventilkammer (15) aufweist, die über einen oder mehrere Kanäle (22) mit der zweiten Zylinderkammer (4) verbunden ist und die eine koaxiale, zur ersten Zylinderkammer (3) gerichtete Ventilöffnung (23) besitzt, die von einem Ventilglied verschließbar ist, das mittels eines die Ventilkammer (15) koaxial durchragenden, manuell betätigbaren Ventilstifts (17) koaxial in Richtung zur ersten Zylinderkammer (3) aus seiner Schließstellung in seine Öffnungsstellung bewegbar ist, wobei die Ventilöffnung (23) mit dem Durchlaßöffnung (26) des Zylinderteils (12, 12') verbunden ist.

11. Verstelleinrichtung nach Anspruch 10, **dadurch gekennzeichnet, daß** das Verbindungsventil (16) ein Sitzventil ist.

## Claims

1. Adjusting device for adjusting a component, in particular a chair back, with a gas spring which has a cylinder (1) which is closed at its one end and in which there is displaceably arranged a piston (2, 2') which subdivides the cylinder (1), which is filled with a fluid under positive pressure, into a first and a second cylinder chamber (3, 4) and has on one side a piston rod (5) which projects through the second cylinder chamber (4) facing away from the closed end of the cylinder (1) and is led out from the cylinder (1) in a sealed manner, wherein a pushing-out force is applied to the piston (2, 2') by the positive pressure in the first cylinder chamber (3), with a connection which leads from the second cylinder chamber (4) to the first cylinder chamber (3) and in which a valve (14) and, downstream thereof, a flow throttle channel are arranged, which allows a throttled fluid flow from the second into the first cylinder chamber (4, 3) and blocks it in the opposite flow direction, and with a manually actuatable connection valve (16) by means of which the first and second cylinder chamber (3, 4) can be connected to one another, wherein, with the piston rod (5) loaded in the insertion direction and the connection valve (16) closed, the passage of the valve (14) from the first cylinder chamber (3) to the second cylinder chamber (4) is blocked, **characterized in that** the piston (2, 2') has a bush (10, 10') which projects into the first cylinder chamber (3) and into the cylindrical inner aperture (13) of which a cylindrical part (12, 12') is inserted with a precise fit, wherein a helical throttle groove (11, 11') which is open towards the cylindrical part (12) or towards the bush (10') is formed on the inner wall (31) of the bush (10) or on the radially encircling lateral surface (30) of the cylindrical part (12'), the first end of said groove being connected to the outlet of the valve (14) and the second end of said groove being connected to the first cylinder chamber (3).

2. Adjusting device according to Claim 1, **characterized in that** the throttle groove (11, 11') has the same cross section over its length.

3. Adjusting device according to either of the preceding claims, **characterized in that** bush (10, 10') and cylindrical part (12, 12') extend coaxially into the first cylinder chamber (3).

4. Adjusting device according to one of the preceding claims, **characterized in that** the cylindrical part (12, 12') has a passage opening (26) which connects the outlet of the connection valve (16) to the first cylinder chamber (3).

5. Adjusting device according to one of the preceding claims, **characterized in that** bush (10, 10') and cylindrical part (12, 12') are connected to one another by means of a press fit.

6. Adjusting device according to one of the preceding claims, **characterized in that** bush (10, 10') and cylindrical part (12, 12') form a preassemblable structural unit which can be connected to the piston (2, 2').

7. Adjusting device according to one of the preceding claims, **characterized in that** an axial seal (28, 38) is arranged axially between piston (2, 2') and bush (10, 10') or cylindrical part (12, 12') and radially separates the connection having the valve (14) from the connection having the connection valve (16).

8. Adjusting device according to either of Claims 6 and 7, **characterized in that** the cylindrical inner aperture (13) of the bush (10') has at its end region facing the piston (2') an internal thread by means of which the bush (10') can be screwed onto a corresponding external thread of the piston (2').

9. Adjusting device according to one of the preceding claims, **characterized in that** the valve (14) has a radially encircling groove (6) on the radially encircling lateral surface of the piston (2, 2') and connected to the first cylinder chamber (3), in which groove a sealing ring (7) of smaller axial extent than the groove (6) is arranged so as to be axially movable between a first groove side wall closer to the first cylinder chamber (3) and a second groove side wall closer to the second cylinder chamber (4), which sealing ring bears in a sealing manner by its outer circumference against the inner wall of the cylinder (1), and an annular gap is formed between its inner circumference and the bottom of the groove and is connected to the first end of the helical throttle groove.

10. Adjusting device according to one of the preceding claims, **characterized in that** the connection valve (16) has a valve chamber (15) which is formed coaxially in the piston (2, 2') and which is connected to the second cylinder chamber (4) via one or more channels (22) and which has a coaxial valve opening (23) which is directed towards the first cylinder chamber (3) and which can be closed by a valve member which, by means of a manually actuatable valve pin (17) projecting coaxially through the valve chamber (15), can be moved coaxially in the direction of the first cylinder chamber (3) from its closed position into its open position, wherein the valve opening (23) is connected to the passage opening (26) of the cylindrical part (12, 12').

11. Adjusting device according to Claim 10, **characterized in that** the connection valve (16) is a seat valve.

## Revendications

1. Dispositif de réglage pour le réglage d'un composant, en particulier d'un dossier de siège, avec un ressort à gaz, qui présente un cylindre (1) qui est fermé à sa première extrémité et dans lequel est disposé de façon coulissante un piston (2, 2'), qui divise le cylindre (1) rempli d'un fluide se trouvant en surpression en une première et une seconde chambre de cylindre (3, 4) et qui présente d'un côté une tige de piston (5), qui traverse la seconde chambre de cylindre (4) située à l'opposé de l'extrémité fermée du cylindre (1) et qui est menée de façon étanche hors du cylindre (1), dans lequel le piston (2, 2') est soumis à une force de sortie par la surpression dans la première chambre de cylindre (3), avec une communication conduisant de la seconde chambre de cylindre (4) à la première chambre de cylindre (3), dans laquelle sont disposés une soupape (14) et à la suite de celle-ci un canal d'étranglement d'écoulement, qui permettent un écoulement étranglé de fluide de la seconde à la première chambre de cylindre (4, 3) et le bloquent dans la direction d'écoulement opposée, et avec une soupape de communication actionnable manuellement (16), par laquelle la première et la seconde chambre de cylindre (3, 4) peuvent être reliées l'une à l'autre, dans lequel lorsque la tige de piston (5) est chargée dans la direction de rentrée et que la soupape de communication (16) est fermée, le passage de la soupape (14) de la première chambre de cylindre (3) à la seconde chambre de cylindre (4) est fermé, **caractérisé en ce que** le piston (2, 2') présente une tubulure (10, 10') pénétrant dans la première chambre de cylindre (3), dans la cavité intérieure cylindrique (13) de laquelle une partie de cylindre (12, 12') est introduite en ajustement serré, dans lequel une rainure d'étranglement (11, 11') de forme hélicoïdale, ouverte vers la partie de cylindre (12) ou vers la tubulure (10') est formée sur la paroi intérieure (31) de la tubulure (10) ou sur la surface latérale radialement périphérique (30) de la partie de cylindre (12'), dont la première extrémité est en liaison avec la sortie de la soupape (14) et dont l'autre extrémité est en liaison avec la première chambre de cylindre (3).

2. Dispositif de réglage selon la revendication 1, **caractérisé en ce que** la rainure d'étranglement (11, 11') présente la même section transversale sur sa longueur.

3. Dispositif de réglage selon l'une quelconque des revendications précédentes, **caractérisé en ce que** la tubulure (10, 10') et la partie de cylindre (12, 12') s'étendent de façon coaxiale dans la première chambre de cylindre (3).

4. Dispositif de réglage selon l'une quelconque des revendications précédentes, **caractérisé en ce que** la partie de cylindre (12, 12') présente une ouverture de passage (26) reliant la sortie de la soupape de communication (16) à la première chambre de cylindre (3) .

5. Dispositif de réglage selon l'une quelconque des revendications précédentes, **caractérisé en ce que** la tubulure (10, 10') et la partie de cylindre (12, 12') sont assemblées l'une à l'autre par ajustement serré.

6. Dispositif de réglage selon l'une quelconque des revendications précédentes, **caractérisé en ce que** la tubulure (10, 10') et la partie de cylindre (12, 12') forment une unité pouvant être préassemblée, qui peut être assemblée avec le piston (2, 2').

7. Dispositif de réglage selon l'une quelconque des revendications précédentes, **caractérisé en ce qu'**un joint d'étanchéité axial (28, 38) est disposé axialement entre le piston (2, 2') et la tubulure (10, 10') ou la partie de cylindre (12, 12'), et il sépare radialement la communication présentant la soupape (14) de la communication présentant la soupape de communication (16).

8. Dispositif de réglage selon l'une des revendications 6 et 7, **caractérisé en ce que** la cavité intérieure cylindrique (13) de la tubulure (10') présente sur sa région d'extrémité tournée vers le piston (2') un filet intérieur, avec lequel la tubulure (10') peut être vissée sur un filet extérieur correspondant du piston (2').

9. Dispositif de réglage selon l'une quelconque des revendications précédentes, **caractérisé en ce que** la soupape (14) présente sur la surface latérale radialement périphérique du piston (2, 2') une rainure radialement périphérique (6) et reliée à la première chambre de cylindre (3), dans laquelle un anneau d'étanchéité (7) de plus faible extension axiale que la rainure (6) est disposé de façon mobile axialement entre une première paroi latérale de rainure plus proche de la première chambre de cylindre (3) et une seconde paroi latérale de rainure plus proche de la seconde chambre de cylindre (4), lequel s'applique avec sa périphérie extérieure de façon étanche sur la paroi intérieure du cylindre (1) et une fente annulaire, qui est reliée à la première extrémité de la rainure d'étranglement de forme hélicoïdale, est formée entre sa périphérie intérieure et le fond de la rainure.

10. Dispositif de réglage selon l'une quelconque des revendications précédentes, **caractérisé en ce que** la soupape de communication (16) présente une chambre de soupape (15) formée de façon coaxiale dans le piston (2, 2'), qui est reliée par un canal ou plusieurs canaux (22) à la seconde chambre de cylindre (4) et qui possède une ouverture de soupape coaxiale (23), dirigée vers la première chambre de cylindre (3), qui peut être fermée au moyen d'un organe de soupape qui est déplaçable au moyen d'une tige de soupape actionnable manuellement (17) traversant de façon coaxiale la chambre de soupape (15), de façon coaxiale en direction de la première chambre de cylindre (3) de sa position de fermeture à sa position d'ouverture, dans lequel l'ouverture de soupape (23) est reliée à l'ouverture de passage (26) de la partie de cylindre (12, 12').

11. Dispositif de réglage selon la revendication 10, **caractérisé en ce que** la soupape de communication (16) est une soupape à siège.
